# EUROPEAN PATENT APPLICATION

(11) **EP 3 072 856 A1**
(43) Date of publication of application: **28.09.2016**
(21) Application number: 15161302.3
(22) Date of filing: 27.03.2015
(51) Int. Cl.: C03B 35/24, C03B 29/12

(54) **APPARATUS FOR CONVEYING A GLASS SHEET ON AN AIR SUPPORT TABLE IN A HEATING FURNACE**

(71) Applicant: Glaston Finland Oy, 33730 Tampere (FI)
(72) Inventor: Rantala, Mikko, 33820 Tampere (FI); Vehmas, Jukka, 33270 Tampere (FI); Kylväjä, Harri, 33960 Pirkkala (FI); Keto, Kyösti, 37470 Vesilahti (FI)
(74) Representative: LEITZINGER OY

(57) **Abstract**

An apparatus for conveying glass sheets on an air support table (9) of a heating furnace, the table comprising blast apertures (12) and exhaust apertures (1). The blast apertures are connected to a plenum chamber (7) under the air support table (9). The exhaust apertures (1) are connected to exhaust passages (2) inside the table, the first end of the passages opening into the furnace (0) or being provided with a closable and openable closing gate (13). The second end of the exhaust passages (2) opens into a suction duct (3) or is provided with a closable and openable barrier gate (11). The suction duct (3) of the blower is on the opposite side of the air support table (9) to the conveyor (10) which is in contact with the glass. In the suction duct (3) between the exhaust passages (2) and the blower (5) is at least one adjustable bypass gate (4) which is used for adjusting the air support of the glass.

## Description

The invention relates to an apparatus for conveying glass sheets on an air support table of a heating furnace, the top surface of which is set at an inclination angle of 0-20° relative to the horizontal plane, the apparatus comprising conveying rollers at that edge of the air support table towards which the top surface of the air support table inclines. A horizontal position of the air support table is also possible, if the conveying rollers are replaced with a conveyor which is in contact with the glass. In the air support furnace, the glass is heated to tempering temperature. The air support table features blast and exhaust apertures. The air flowing through the blast apertures under the glass generates an overpressure underneath the glass with respect to the pressure prevailing in the furnace, on which pressure the floating of the glass on an air bed is based. The overpressure supporting the glass is at its peak at the pressure apertures. The exhaust apertures prevent the bulging of the glass as the air blasted under the glass is able to escape also from elsewhere than through the edges of the glass. By the bulging of the glass is meant its bending into a convex shape when the supporting pressure and the air bed under the glass are higher in the middle than on the edges. Bulging is encouraged by the reduction of glass stiffness due the thickness decreasing and the temperature rising.

Glass has a density of about 2500 kg/m³. In order for glass to float, the average overpressure under the glass must be about 25 Pa per thickness millimetre of glass. Accordingly, for example 10 mm glass requires an overpressure of about 250 Pa in the air bed underneath it. Blasting is controlled by varying the overpressure in a plenum chamber under the table where the mouths of the blast apertures are located. This so-called blast pressure is adjusted by varying the rotational speed of the blower. The effect of the exhaust apertures on supporting the glass is dependent on the number of apertures, the diameter of the apertures, and the tightness of the flow channels on the way back from the exhaust apertures to the furnace. The effect of the exhaust apertures is also dependent on the suction pressure generated by the blower at the exhaust apertures, if the exhaust passages are connected to the blower. As the exhaust aperture area increases, the blast apertures require an increasingly high blast pressure for bringing the glass to float, in order to provide an air bed with the aforesaid average overpressure of about 25 Pa per glass thickness millimetre under the glass.

From the publication US 4 200 446 is known a gas hearth block similar to the above-described air support table of a heating furnace for glass sheets, wherein the exhaust apertures are connected to the exhaust passages in the hearth block. The blower is positioned outside the actual furnace chamber, adjacent to the furnace. The blower draws air directly from the furnace. The overpressure generated in the air bed by the weight of the glass with respect to the pressure in the exhaust passages displaces air from under the glass, through the exhaust apertures into the exhaust passages, through the ends of which the air flows from the hearth back into the furnace. There is an overpressure in the exhaust passages with respect to the pressure prevailing in the furnace due to the overpressure in the air bed. The air flow through the exhaust apertures increases as the overpressure in the air bed increases with increasing glass thickness. The effect of the exhaust apertures on supporting the glass cannot be adjusted in any way.

From the publication EP 1 836 115 is known a glass sheet air support table resembling that described above, where the exhaust apertures are connected to an exhaust chamber under the table top. From the exhaust chamber, air flows through a blower into pressure ducts, from where it flows under the glass through blast apertures. The blower is only connected to the exhaust chamber on the suction side and does not receive air from elsewhere. The blower generates a suction pressure, that is, an underpressure with respect to the oven, in the exhaust chamber and air is drawn into the exhaust apertures, even if there is no glass on the table. In this solution, the suction pressure in the exhaust chamber and at the exhaust apertures inevitably always rises, when the blast pressure is increased. The effect of the exhaust apertures on supporting the glass cannot, therefore, be separately adjusted in any way. It is a prerequisite for the operation of the table that there is sufficient empty space between the glasses, so that a significant part of the exhaust apertures will be located in a glass-free area. The blower will then draw air directly through the exhaust apertures at the glass-free area. When the glass covers all the exhaust apertures, it can no longer float, or a thin soda-lime glass at over 600°C in a tempering furnace will then at least be drawn into contact with the table due to strong local suction.

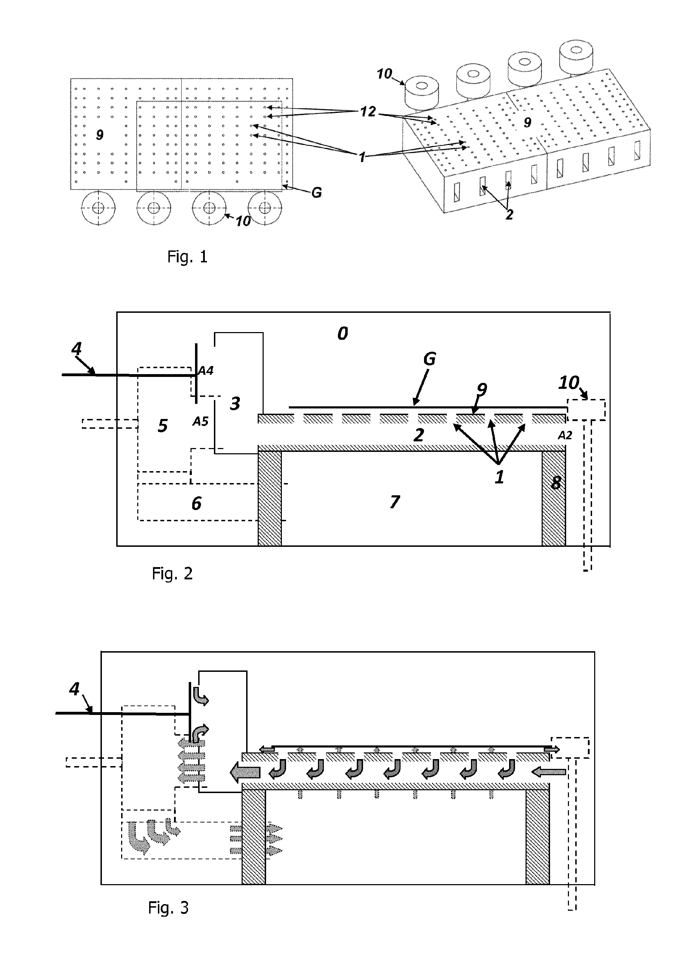

From the publication US 8 297 077 is known an air support table of a glass sheet heating furnace resembling that described above, where the blast apertures do not have a joint plenum chamber. The blast apertures are connected to pressure ducts and the exhaust apertures to exhaust passages. From the exhaust passages, air flows through the blower into the pressure ducts, from where it flows under the glass through the blast apertures. The blower is connected to the exhaust passages on its suction side. On the suction side of the blower is, in addition, a drain hatch, through which air flows directly from the furnace to the air circulation. The publication discloses that the volume flow through the drain hatch replaces the volume flow discharging into the furnace from between the edges of the glass and the air table. Then again, this is obvious since the mass flow on the suction and pressure side of the circulating fan is always the same. The publication does not disclose that a gate is used for adjusting the air support. The publication does not define the cross-sectional area of the gate, but according to the proportions of Figure 1C of the publication, the diameter of the connecting pipe of the gate is approximately one quarter of the diameter of the suction inlet of the blower. Thus, the cross-sectional area of the connecting pipe, that is, the maximum cross-sectional area of the drain hatch is only an eighth of the cross-sectional area of the suction inlet of the fan. Since the fan is always connected to the exhaust passages, zero suction pressure cannot be obtained. In the publication, the exhaust passages open only in the direction of the fans, because the opposite ends of the exhaust passages are fixedly closed. In the publication, 50 Pa (0.5 mbar) is given as the maximum pressure difference along the pressure duct, that is, the maximum blast pressure is not very constant. The corresponding suction pressure variation along the exhaust passage has not been given. In the publication, the pressure ducts are connected to the air support table on the opposite side to the exhaust passages. There is thus no room for conveying rollers.

The aim of the invention is to provide an apparatus of the above type, in which the blast pressure is constant and by means of which the effect of the exhaust apertures on supporting the glass can be controlled even better. This aim is achieved according to the invention, by means of the characteristics disclosed in claim 1. The dependent claims disclose preferred embodiments of the invention.

In the invention, there is an adjustable gate in the air duct, on the suction side of the blower, at the corresponding point as in the publication US 8 297 077. The gate is called a bypass gate, because the air flowing through it to the air circulation bypasses the exhaust passages of the air support table without flowing through them. A part of the volume flow of the blower is drawn from the furnace to the passages through the exhaust apertures of the air support table and the ends of the exhaust passages of the air support table, which are open, in contrast to the publication US 8 297 077. The volume flow through the bypass gate corresponds to the volume flow which discharges into the furnace through the blast apertures of the glass-free area or from between the glass edges and the air table. In a tempering furnace, the glass is never a continuous web, but separate sheets with gaps of at least 150 mm between them. In an air support furnace, only one glass, not more, can be moved in parallel. The width of the glass is rarely the maximum one, that is, equal to the width of the blasting area. Some of the blast apertures of the air support table are thus always without a glass on top of them.

When the bypass gate is opened, the overpressure in the plenum chamber under the air support table, that is, the blast pressure, rises with respect to the pressure in the furnace or outside the furnace, and the suction pressure falls. The pressure prevailing in the furnace and outside the furnace is usually almost the same. Suction pressure refers to the underpressure generated by the suction of the blower in the exhaust passage, with respect to the pressure prevailing in the furnace or the pressure prevailing outside the furnace. The blast pressure increases because opening the gate facilitates the supply of air to the blower. The suction pressure in the exhaust passage decreases when air flows to the blower also through the bypass gate. The suction pressure in the exhaust passages can be lowered when the mouth opened by the bypass gate is large.

The effect of the exhaust apertures on supporting the glass can be adjusted by means of the bypass gate. As adjustment of the effect of the exhaust apertures suffices manual adjustment, where the bypass gate is opened or closed on the basis of empirical information, for example, according to glass thickness. The suction pressure does not necessarily have to be measured.

More sophisticated adjustment may be based on measured suction pressure. The suction pressure can be measured, for example, from one exhaust passage. When the glass is in air support, this reduces the real flow area of the exhaust apertures, as described at the end of the application. Thus, since the aperture area on the suction side of the blower opening into the furnace is already small, this reduction in the exhaust aperture area increases the suction pressure markedly. Therefore, the size (surface area) of the glass load on the air support table affects the suction pressure. A sufficiently large adjustable bypass gate makes possible the kind of suction pressure level in the exhaust passage, which removes enough of the air flowing into the air bed through the blast apertures to prevent the glass from bulging. Excessive suction pressure causes the glass to adhere to the air support table first at that point in the exhaust aperture row where the suction pressure weakens the support of the glass most. In the apparatus according to the invention, when the bypass gate is fully open, the suction pressure in the exhaust passage of the air support table at the exhaust passage blower end is below 50 Pa (of underpressure), when there is no glass on the air support table; preferably below 25 Pa (of underpressure) or less than 10% of the blast pressure. When the glass covers the air support table, the underpressure measured from the exhaust passage increases, but never exceeds 100 Pa.

The suction pressure can also be brought to zero by preventing direct flow from the exhaust passages of the air support table to the blower by means of a second gate. This gate is called a barrier gate. Closing the barrier gate partly or completely is advantageous when floating thicker glasses, since moving increasingly thick glass on the air table is made possible by the same blower.

As opposed to thin glasses, thick glasses do not bulge easily on the air bed if the overpressure in the air bed is higher in the middle than on the edge regions. Rigidity is increased not only by thickness, but also by a lower tempering temperature, that is, the final heating temperature, which can be with thick glass. The material properties which increase the rigidity of glass are, for example, clearly more pronounced at 630°C than at 670°C. With thick glass, the significance of the exhaust apertures on the straightness of the glass is not as marked as with thin glass. Maximum support pressure for the air bed is obtained when there are no exhaust apertures. The effect of the exhaust apertures can be eliminated by closing, in addition to the barrier gate, also the closing gate, which closes also the other end of the exhaust passage of the air support table. Air will thus not be able to escape anywhere through the exhaust apertures of the table and the exhaust apertures will thus not have a weakening effect on the support of the glass. This is, therefore, equivalent to a complete absence of exhaust apertures.

Embodiments of the invention are illustrated in the following, with reference to the accompanying drawings, in which
- Figure 1: shows a top view and a perspective view of the air support table;
- Figure 2: shows a diagrammatic cross-section of the air support table with the reference numerals of the parts of the air circulation;
- Figure 3: illustrates the air flows when gate 4 is partly open;
- Figure 4: illustrates the air flows when gate 4 is open;
- Figure 5: illustrates the air flows when the gate is closed;
- Figure 6: corresponds otherwise to Figure 5, but gate 11 is located at a different point;
- Figure 7: illustrates the air flows when gates 11 and 13 at the ends of the exhaust passages are closed.

Figure 1 shows a top view and a perspective view of a ceramic air support table 9 with conveying rollers 10. Figure 2 is a cross-sectional view of the air support table and the passages connected to it. One unit of the air support furnace covers a partial length of the air support table 9 and one blower 5 with passages. Glass G floats over the table 9. Between the glass G and the table 9 is a thin bed of air with a thickness of 0.2-0.8 mm. In Figures 2-7, the air support table 9 is in a horizontal position. In reality, the air support table 9 equipped with conveying rollers 10 and its relevant components is at an angle of 1-20° to the horizontal plane, the side with the conveying rollers 10 being closer to the floor than the side with the blower 5. The inclination presses the side edge of the glass G against the conveying rollers 10. The speed of travel of the glass G in the furnace is equal to the peripheral speed of the rollers 10. The air support table 9 has exhaust apertures 1, leading to rectangular exhaust passages 2 inside the table. The roller 10 side ends of the exhaust passages 2 open into the furnace 0 and the opposite ends are connected to the suction duct 3 of the blower 5. One blower 5 draws air from several exhaust passages 2. The suction duct 3 has an aperture opening into the furnace 0, the flow area of which aperture can be adjusted with a bypass gate 4. There may be several bypass openings and gates 4. When fully open, the flow area ∑A4 of the aperture/apertures opened by the gate/gates 4 into the furnace 0 is at least 25% of the flow area A5 of the suction inlet of the blower 5. The blower 5 pressurizes the air and conducts it through a pressure duct 6 into a plenum chamber 7. The plenum chamber walls are made up by the floor of the furnace, the air support table 9, and load-bearing walls 8. In the plenum chamber 7, the air pressure at the mouths of the blast apertures 12 is constant. The air discharges through blast apertures 12 extending through the entire thickness of the air support table 9 into an air bed underneath the glass G, or directly into the furnace 0 if there is no glass on top of the blast aperture. From the air bed, the air escapes through the exhaust apertures 1 into the exhaust passages 2, and through the edges of the air bed into the furnace 0. In the air support table, both the blast apertures 12 and the exhaust apertures 1 are arranged in rows. The pressure difference between the plenum chamber 7 and the furnace 0 or the exterior environment of the furnace is measured with a pressure gauge, so that the blast pressure is known and adjustable.

In Figures 1 and 2 are marked the reference numerals of the parts. For the sake of clarity, in Figures 3 to 7 are only marked the reference numerals of the gates. Figures 3-7 illustrate the air flows in the cross-section of Figure 2. The flow paths in the Figures differ from one another due to the position or location of the gate. The Figures focus on depicting the differences in flows on the suction side of the blower 5, and on the suction side the changes in the size of the arrows aim to illustrate the changes in the volume flow, a larger arrow corresponding to a larger volume flow. In the following, however, a few comments on the flows on the pressure side of the blower.

Changes on the suction side of the blower 5 also affect changes on the pressure side of the blower. For example, merely opening the bypass gate 4 increases the volume flow also on the pressure side of the blower 5. Thus, the rotation speed of the blower can be reduced to obtain the original volume flow. Furthermore, when the glass G comes over the blast aperture, the air flow discharging from the blast aperture decreases, because the counterpressure increases approximately in proportion to the weight of the glass. On the other hand, at the same time, the pressure in the plenum chamber 7 also increases to some extent. When the glass G arrives on the air support table 9, the flow from the blast apertures covered by the glass decreases somewhat and that from the glass-free area increases somewhat. The arrows illustrating the flow are, however, in all cases the same on the pressure side of the blower.

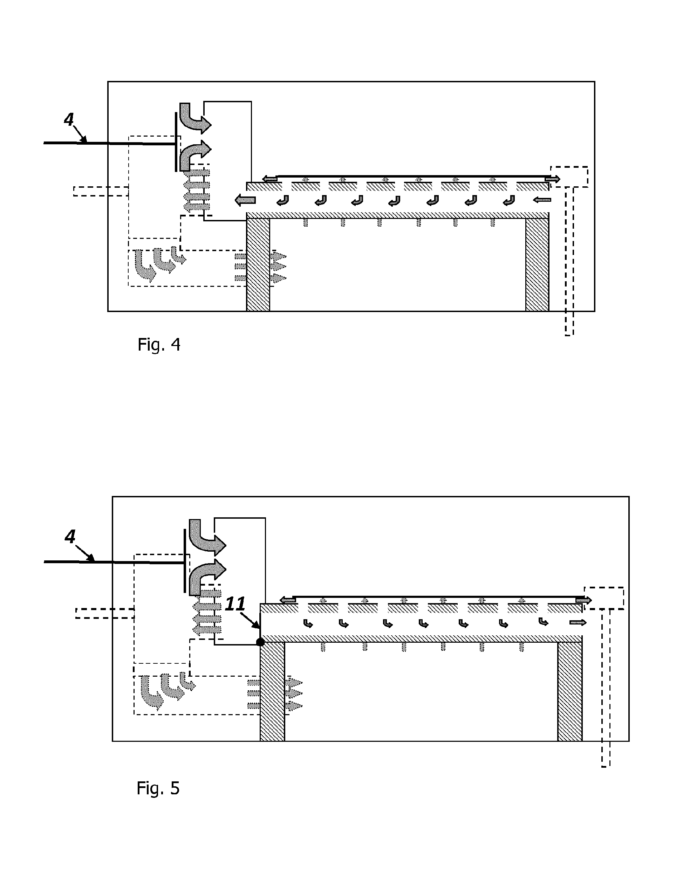

The difference between Figures 3 and 4 is the position of the bypass gate 4. In Figure 3, the gate 4 is only partly open. In the exhaust passage 2 is then generated a relatively strong suction pressure, that is, underpressure with respect to the pressure in the furnace 0, in which case the air flow rate into the passage 2 through the exhaust apertures 1 and the conveying roller 10 side end of the passage is high. In Figure 4, the gate 4 is clearly more open than in Figure 3. When the gate 4 is opened, the suction pressure in the exhaust passage decreases, and an even smaller proportion of the volume flow flowing to the blower 5 flows through the exhaust apertures 1. Thus, the effect of the exhaust apertures in weakening the floating of the glass lessens. From the adjustment range of the bypass gate 4 can be found the bypass gate 4 position and the rotation speed of the blower 5 which float the glass sufficiently and evenly.

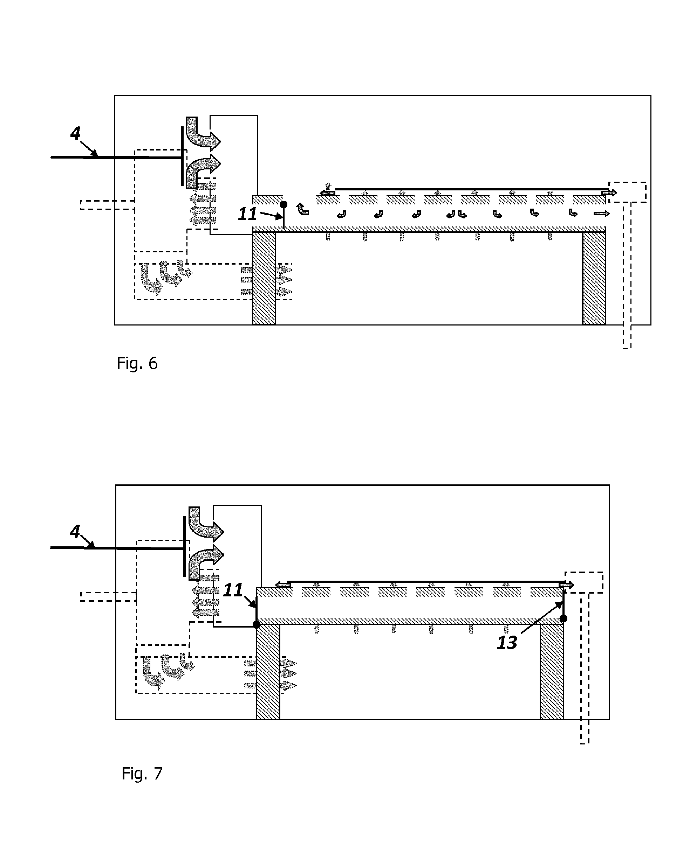

Figures 5 to 6 illustrate air flows when the barrier gate 11 prevents air from flowing through the exhaust passages 2 of the air support table directly to the suction duct 3 of the blower. The difference between Figures 5 and 6 is the location of the barrier gate 11.

In Figure 5, the overpressure generated in the air bed under the glass forces air through the exhaust apertures 1 into the exhaust passages 2, from the conveying roller side end of which air flows into the furnace 0. Air thus flows in only one direction. The flow rate in the exhaust passage 2 increases in the direction of flow and at the same time the static pressure decreases. Thus, the pressure difference between the air bed and the exhaust passages 2 increases in the direction of flow and makes the support of the glass on the air bed somewhat one-sided.

In Figure 6, the closing of the barrier gate 11 has cut the direct flow path from the exhaust passages 2 to the suction duct 3 and opened a flow path from the exhaust passages 2 to the furnace. As a result, the one-sidedness of the glass support shown in the case of Figure 5 is eliminated.

Figure 7 illustrates the air flows when the barrier gate 11 prevents air from flowing through the exhaust passages of the air support table into the suction duct 3 of the blower and the closing gate 13 prevents flow from the conveying roller side ends of the exhaust passage into the furnace 0. In Figure 7, there is no flow in the exhaust passages 2, because air is not able to flow further from them.

In Figures 5 and 6, the weakening effect of the exhaust apertures on the average overpressure of the air bed, that is, the support of the glass, has been reduced by eliminating with an barrier gate 11 the suction pressure generated by the blower in the exhaust passage 2. In Figure 7, also the pressure difference between the air bed and the exhaust passages caused by the glass' own weight is eliminated by means of a closing gate 13. In Figure 7, the exhaust apertures have no effect on the average overpressure of the air bed, that is, the support of the glass by the air bed is at its maximum.

Examples of the use of gates are described by the following three cases, wherein the thickness of the glass to be tempered changes. The glass is tempered in all cases. The second moment of area resisting bending increases in the third power of glass thickness. For thin 2 mm glass, the tempering temperature is 670°C, for 6 mm glass it is 630°C, and for 10 mm glass 620°C. Within the temperature range of approximately 600-700°C, glass changes from an elastic to a plastic material, whereby at temperatures exceeding 600°C, the elastic modulus of glass is unspecific for definition. The elastic modulus of glass declines roughly to about a fifth, when the temperature of the glass rises from a temperature of 620°C to a temperature of 670°C. As elasticity decreases with temperature, the glass creeps, that is, bends in relation to time, at an increasingly rapid rate.

At its tempering temperature, thin 2 mm glass is flexible and shapes quickly to match the supporting differences in the air bed of an air support table. It is, therefore, necessary to render the supporting strength of the air bed as consistent as possible to enable the furnace to produce straight glass. This is not possible without the exhaust apertures 1. The bypass gate 4 is half open to provide a suitably low suction pressure in the exhaust passage. For example, the risk of scratching the glass is lessens as the air bed height increases, since the glass is no longer as likely to collide locally and momentarily with the table. On the other hand, as the height of the air bed increases, the bulging of glass increases. Avoiding bulging, that is, the consistency of support is the more important the closer the end of the furnace is, and thus in the units at the end of the furnace the bypass gate may be closed slightly more in order to increase the suction pressure slightly and to reduce the height of the air bed. The suction pressure may not, however, be too high and the speed of travel of the glass must be sufficient to prevent the alternately repeating local supporting maxima (at the blast aperture rows) and minima (at the exhaust aperture rows) from imparting a wavy shape to the glass. Gates 11 and 13 are not needed.

Medium thickness 6 mm glass is considerably more rigid at its tempering temperature than 2 mm glass. In order to float, it requires a three times higher overpressure in the air bed than 2 mm glass. This pressure can still be generated by increasing the rotational speed of the blower 5 close to the maximum and by opening the bypass gate 4 fully. Opening the bypass gate 4 increases blast pressure, that is, the pressure difference between the plenum chamber 7 and the furnace 0 somewhat, and decreases the suction pressure. Partial closing of the barrier gate 11 may also be necessary, if it is desirable to decrease the revolutions of the blower. The closing gate 13 is not needed.

Thick 10 mm glass is even more rigid at its tempering temperature than 6 mm glass. In order to float, it requires a five times higher overpressure in the air bed than 2 mm glass. The glass will not float even when the rotational speed of the blower 5 is at its maximum and the gate 4 is fully open. Even closing the barrier gate 11 completely does not suffice. Although closing the closing gate 13 does not affect the blast pressure, it increases the average overpressure in the air bed underneath the glass considerably and makes even 10 mm glass float.

Most of the glass to be tempered is 6 mm thick or thinner, in which case, in order to adjust the air support, opening/closing the bypass gate 4 and adjusting the speed of rotation of the blower 5 suffices. The barrier gate 11 and the closing gate 13 enhance the ability of the air support furnace to float and heat increasingly thick glasses to tempering temperature.

The above three examples are only suggestive. It is in any case difficult - or even impossible - to dimension the blast and pressure apertures of the air support table in such a way that the adjustment of the speed of rotation of the blower would alone suffice to provide sufficient and consistent support for glasses of various sizes and thicknesses. The dimensioning of the blower is restricted by the space available for the blower and the air ducts.

The external dimensions of the furnace increase as the blower becomes larger. The bypass gate 4, together with the adjustment of the rotation speed of the blower, makes it possible to adjust the effect of the exhaust apertures 2 on the support of the glass, while the blast pressure remains constant. The barrier gate 11 makes it possible to adjust the suction pressure to zero. By means of the barrier gate 11 and the closing gate 13, the air support table can be made to function without exhaust apertures. All the above-mentioned adjustments can be made manually or electrically from outside the furnace, that is, the furnace does not have to be cooled down.

The aim of the invention is, therefore, to provide an apparatus of the above-mentioned type, wherein the blast pressure is consistent and by means of which the effect of the exhaust apertures on the support of the glass can be controlled even better. Consistent blast pressure is achieved by using, instead of separate pressure ducts, a single plenum chamber with blast apertures connected to it. Better adjustment is achieved by making the effect of the exhaust apertures on the support of the glass separately adjustable and less dependent on the degree of loading of the air table.

The foregoing combination of advantages with respect to the air support tables of prior furnaces is obtained by means of the apparatus according to the independent claim of the present patent application. The dependent claims of the application provide further improvements. Improved adjustment makes it possible to find the appropriate suction/blast pressure combination for glasses of different sizes and thicknesses. Improved adjustment also makes possible the floating of increasingly thick glass.

Dimensions are essential in all designing. Usually, for example, a lack of space and expenses set limits to the dimensions available. For example, in a separate pressure duct, an equally consistent pressure can be achieved as in a joint plenum chamber if the dimensions of the pressure ducts are enlarged without limit. The most significant dimension is the size of the gate 4. This is considered in the following and at the same time is also established why the fact that one end of the exhaust passage opens into the furnace is a significant difference with respect to the publication US 8 279 077.
∑A1 is the sum of the flow areas of the exhaust apertures 1 of the air support table unit when there is no glass on top of them.
∑A2 is the sum of the flow area of the exhaust passages 2 of the air support table unit opening directly into the furnace 0.
∑A4 is the sum of the flow areas of the bypass gates 11 of the air support table unit.
A5 is the flow area of the suction inlet of the blower 5 of the air support table unit. In the apparatus according to the invention, ∑A1 ≈ ∑A2 ≈ ∑A4 ≈ A5.
In the air support table of the publication US 8 297 077,
∑A2(US 8 297 077) = 0.
Let us presume that also in the air support table of the publication US 8 297 077, the dimensions are as follows.
∑A1(US 8 297 077) = ∑A1
∑A1(US 8 297 077) = << ∑A4, for instance 0.125 x A5
A5(US 8 297 077) = A5
Let us mark ∑A1=A, ∑A2=A, ∑A4=A, A5=A

Case 1: There is no glass on the air support table (loading degree 0%).
In the apparatus according to the invention, on the suction side of the blower is 3xA of free aperture area opening into the furnace.
In the apparatus according to the publication US 8 297 077, on the suction side of the blower is 1.125xA of free aperture area opening into the furnace.

Case 2: The air support table is half full with glass (loading degree 50%).
In the apparatus according to the invention, on the suction side of the blower is 2.5xA + Cx0.5xA of free aperture area opening into the furnace.
In the apparatus according to the publication US 8 297 077, on the suction side of the blower is 0.625x∑A + Cx0.5xA of free aperture area opening into the furnace.

Case 3: The air support table is full of glass (loading degree 100%).
In the apparatus according to the invention, on the suction side of the blower is 2xA + CxA of free aperture area opening into the furnace.
In the apparatus according to the publication US 8 297 077, on the suction side of the blower is 0.125xA + CxA of free aperture area opening into the furnace.

Above, coefficient C defines how large a proportion of the free exhaust aperture the exhaust aperture under the glass corresponds to. Coefficient C is dependent on the change in the most limited surface area of the exhaust aperture, from which follows the calculation below.

The surface area of the mouth of the free exhaust aperture is (π/4)D², where D is the diameter of the mouth of the exhaust aperture. The diameter of the mouth of the exhaust aperture remaining under the glass is nDH, where H is the height of the air bed. A typical height H of the air bed is 0.5 mm and let the diameter of the exhaust opening be 10 mm. Thus, if H=0.5 mm, then (π/4)D² = 5nDH. That is, coefficient C is 0.2. In practice, coefficient C is ever smaller, because when flowing into the free exhaust aperture, no pressure loss occurs before the mouth of the exhaust aperture, but when flowing into the exhaust opening under the glass, pressure loss occurs, because the air has to travel through a passage of limited size from the pressure aperture to the exhaust aperture.

When C=0.2, in the apparatus according to the invention, the change in the loading degree reduces the free aperture area (free area) of the suction side of the blower opening into the furnace according to the following table.

| Loading degree | Free area | Free area |
|---|---|---|
| 0% | 3A | 100% |
| 50% | 2.6A | 87% |
| 100% | 2.2A | 73% |

When C=0.2, in the apparatus according to the publication US 8 297 077, the change in the loading degree reduces the free aperture area (free area) of the suction side of the blower opening into the furnace according to the following table.

| Loading degree | Free area | Free area |
|---|---|---|
| 0% | 1.125A | 100% |
| 50% | 0.725A | 64% |
| 100% | 0.325A | 29% |

When the above tables are compared, it can be seen that in the solution according to the invention, the free area is clearly larger than in the apparatus according to the US publication, and that contrary to the solution according to the invention, the proportional free area diminishes steeply in the apparatus according to the US publication as the loading degree increases. The air supply of the blower is dependent on the free aperture area on the suction side of the blower 5. A reduction in the aperture area results in a lower blast pressure in the plenum chamber 7 and a higher suction pressure in the exhaust passages 2. In the apparatus according to the invention, the above-mentioned pressures and the support pressure of the air bed react markedly less to changes in the loading degree than in the apparatus of the publication US 8 297 077. This improves the controllability of the apparatus considerably.

Should in the calculations of the publication US 8 297 077 be made the change ∑A4 (US 8 297 077) = ∑A4, the effect of the ratio of the area with glass to the glass-free area on the air supply of the blower would still be significantly greater than in the invention. The opening of one end of the exhaust passage into the furnace according to the invention brings about this difference. The air supply of the blower affects the air support of the glass through the blast pressure and the exhaust passages.

Should in the calculations of the publication US 8 297 077 be made the change ∑A4 (US 8 297 077) = 2x∑A4, the calculations would give the same result. In this case, the situation would already begin to resemble the case disclosed in the publication US 4 200 446, where the blower is not connected to the exhaust passages. There is a difference between supplying air to the blower from the bypass gate to supplying it through the end of the exhaust passages opening into the furnace. When the flow rate to the blower through the ends of the exhaust passages opening into the furnace increases, also the flow velocity in the exhaust passages increases, whereby the static pressure in the exhaust passage decreases, that is, the suction pressure at the exhaust apertures increases. When the flow rate to the blower through the bypass gate increases, the flow rate through the exhaust passages to the blower decreases, and thus the suction pressure at the exhaust apertures decreases.

The invention is not limited to the above embodiment. The conveying rollers 10 can also be understood to refer to other types of conveyors which come into contact with the glass.

## Claims

1. An apparatus for conveying glass sheets on an air support table (9) of a heating furnace, the table comprising blast apertures (12) and exhaust apertures (1), and wherein the blast apertures are connected to a plenum chamber (7) under the air support table (9), and wherein the exhaust apertures (1) are connected to exhaust passages (2) inside the table, the first end of the passages opening into the furnace (0) or being provided with a closable and openable closing gate (13), and wherein the second end of the exhaust passages (2) opens into a suction duct (3) or is provided with a closable and openable barrier gate (11), and wherein the suction duct (3) of the blower is on opposite side of the air support table (9) to the conveyor (10) which is in contact with the glass, **characterised in that** in the suction duct (3) between the exhaust passages (2) and the blower (5) is at least one adjustable bypass gate (4) which is used for adjusting the air support of the glass.

2. An apparatus as claimed in claim 1, **characterised in that** the suction duct (3) of the blower is connected to the exhaust passages (2) on the same side of the air support table (9) on which the pressure duct (3) of the blower is connected to the plenum chamber (7).

3. An apparatus as claimed in claim 1, **characterised in that** the suction pressure in the exhaust passage (2) is arranged to be adjustable by opening/closing the bypass gate, and the suction pressure refers to the pressure difference between the furnace (0), or the exterior of the furnace, and the exhaust passage (2).

4. An apparatus as claimed in claim 1 and 3, **characterised in that** the pressure difference between at least one exhaust passage (2) or exhaust aperture (1) and the furnace (0), or the exterior environment of the furnace, is arranged to be measured with a pressure gauge.

5. An apparatus as claimed in claim 1, 3 and 4, **characterised in that** the suction pressure in the exhaust passage (2) is arranged to be within the range from 1-50 Pa.

6. An apparatus as claimed in claim 1, **characterised in that** the cross-sectional area (∑A4) of the aperture/apertures opened by the fully open position of the gate/gates (4) is at least 25% of the cross-sectional area (A5) of the suction inlet of the blower.

7. An apparatus as claimed in claim 1, **characterised in that** the cross-sectional area (∑A4) of the aperture/apertures opened by the fully open position of the gate/gates (4) is at least 50% of the cross-sectional area (A5) of the suction inlet of the blower.

8. An apparatus as claimed in claim 1, **characterised in that** the bypass gate (4) can be adjusted from outside the furnace when the furnace is closed.

9. An apparatus as claimed in claim 1, **characterised in that** the aperture area opened by the bypass gate/gates (4) diminishes as the temperature of the glass rises.

10. An apparatus as claimed in claim 1 or 2, **characterised in that** the aperture area opened by the bypass gate/gates (4) diminishes as the period of presence in the furnace increases.

11. An apparatus as claimed in claim 1 or 2, **characterised in that** the aperture area opened by the bypass gate/gates (4) diminishes in the direction of travel of the glass.

12. An apparatus as claimed in claim 1, **characterised in that** the cross-sectional area (∑A4) of the aperture/apertures opened by the fully open position of the bypass gate/gates (4) is at least 25% of the sum of the cross-sectional areas of blower-specific exhaust passages.

13. An apparatus as claimed in claim 1, **characterised in that** the cross-sectional area (∑A4) of the aperture/apertures opened by the fully open position of the bypass gate/gates (4) is at least 50% of the sum (∑A4) of the cross-sectional areas of the blower-specific exhaust passages.

14. An apparatus as claimed in claim 1, **characterised in that** the flow of air from the exhaust passage to the suction duct (3) can be completely or partly prevented by means of a barrier gate (11).

15. An apparatus as claimed in claim 1, **characterised in that** the flow of air from the exhaust passage to the furnace (0) can be completely or partly prevented by means of a closing gate (13) when the barrier gate (11) is closed.
